# EUROPÄISCHE PATENTSCHRIFT

(11) **EP 3 571 130 B1**
(45) Veröffentlichungstag und Bekanntmachung des Hinweises auf die Patenterteilung: **24.02.2021**
(21) Anmeldenummer: 18701146.5
(22) Anmeldetag: 18.01.2018
(51) Int. Cl.: B65D 65/40, B65D 65/42, B65D 5/20, B65G 1/137

(54) **LAGEREINHEIT**
STORAGE UNIT
UNITÉ DE STOCKAGE

(30) Priorität: 23.01.2017 DE 102017101231
(43) Veröffentlichungstag der Anmeldung: 27.11.2019
(73) Patentinhaber: Walz-Verpackungen GmbH, 88515 Langenenslingen-Ittenhausen (DE)
(72) Erfinder: WALZ, Bernd, 88515 Langenenslingen-Ittenhausen (DE)
(74) Vertreter: Daub, Thomas
(86) Internationale Anmeldenummer: PCT/EP2018/051201
(87) Internationale Veröffentlichungsnummer: WO 2018/134300

(56) Entgegenhaltungen:
- EP-A1- 0 742 164
- JP-A- H10 146 906
- JP-A- 2006 225 022

## Beschreibung

### Stand der Technik

Die Erfindung betrifft eine Lagereinheit, insbesondere für ein zumindest teilautomatisiertes Lagersystem.

Es ist bereits eine Lagereinheit, insbesondere für ein zumindest teilautomatisiertes Lagersystem, mit zumindest einem Schachtelelement, das zumindest im Wesentlichen aus einem Zellulosematerial ausgebildet ist, vorgeschlagen, jedoch gegenüber Metall- oder Holzkonstruktionen als nachteilig bewertet worden (EP 0 742 164 A1).

Die Aufgabe der Erfindung besteht insbesondere darin, eine gattungsgemäße Lagereinheit mit verbesserten Eigenschaften hinsichtlich einer Belastbarkeit und Haltbarkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können. Weiterhin betrifft die Erfindung mit Patentansprüchen 14-18 Lagersysteme, die derartige Lagereinheiten umfassen.

### Vorteile der Erfindung

Die Erfindung geht aus von einer Lagereinheit, insbesondere für ein zumindest teilautomatisiertes Lagersystem, mit zumindest einem Schachtelelement, das zumindest im Wesentlichen aus einem Zellulosematerial ausgebildet ist.

Es wird vorgeschlagen, dass die Lagereinheit zumindest ein Beschichtungselement umfasst, das zu einer zumindest teilweisen Beschichtung des zumindest einen Schachtelelements vorgesehen ist. Dadurch kann die Lagereinheit besonders belastbar und widerstandsfähig ausgebildet werden. Die Lagereinheit ist dabei zur Verwendung in einem teil- und/oder vollautomatisierten Lagersystem vorgesehen.

Das Schachtelelement weist vorzugsweise eine Bodenwandung mit einem rechteckigen Grundriss auf. Weiterhin vorteilhaft weist das Schachtelelement zumindest eine Rückwandung auf, die sich senkrecht zur Bodenwandung erstreckt. Besonders vorteilhaft weist das Schachtelelement zwei Seitenwandungen auf, die sich senkrecht zur Bodenwandung erstrecken. Bevorzugt grenzen die Seitenwandung jeweils an der Rückwandung an und/oder erstrecken sich senkrecht zur Rückwandung. Vorteilhaft weist das Schachtelelement eine Frontwandung auf, die sich senkrecht zur Bodenwandung erstreckt. Bevorzugt grenzt die Frontwandung an die Seitenwandungen an und/oder erstreckt sich senkrecht zu den Seitenwandungen.

Eine Erstreckung bezieht sich in diesem Zusammenhang immer auf eine Haupterstreckungsebene der jeweiligen Wandung. Unter einer "Haupterstreckungsebene" soll in diesem Zusammenhang insbesondere eine Ebene verstanden werden, welche parallel zu einer größten Seitenfläche eines kleinsten gedachten Quaders ist, welcher das beschriebene Objekt gerade noch vollständig umschließt, und insbesondere durch den Mittelpunkt des Quaders verläuft. Unter "zumindest im Wesentlichen" soll in diesem Zusammenhang insbesondere mit einem Gesamtmassenanteil und/oder Gesamtvolumenanteil von mehr als 50 %, bevorzugt von mehr als 80 %, besonders bevorzugt von mehr als 95 %, besonders bevorzugt von 100 % verstanden werden. Insbesondere bildet das Zellulosematerial ein Papiermaterial oder bevorzugt ein Pappmaterial aus. Bevorzugt ist das Schachtelelement mehrlagig ausgebildet.

Besonders stabil kann die Lagereinheit ausgebildet werden, wenn das Schachtelelement zumindest eine Außendecke, zumindest eine Wellenbahn und zumindest eine Innendecke umfasst, wobei die zumindest eine Wellenbahn zwischen der zumindest einen Außendecke und der zumindest einen Innendecke angeordnet ist.

Vorzugsweise bilden die Außendecke und/oder die Innendecke eine Schicht, insbesondere eine Pappschicht aus, die flach und/oder ungewellt ausgebildet ist. Weiterhin vorteilhaft bildet die Wellenbahn eine Schicht, insbesondere eine Pappschicht aus, die gewellt ausgebildet ist. Es ist in diesem Zusammenhang jedoch auch denkbar, dass das Schachtelelement zusätzliche Zwischendecken und weitere Wellenbahnen umfasst, die zwischen der Außendecke und der Innendecke angeordnet ist. Weiterhin ist es grundsätzlich denkbar, dass die Außendecke oder die Innendecke weggelassen wird. Bevorzugt ist das Schachtelelement zumindest im Wesentlichen aus Wellpappe ausgebildet. Es ist in diesem Zusammenhang jedoch auch denkbar, dass das Schachtelelement aus Graupappe ausgebildet ist.

Bevorzugt weist das Beschichtungselement eine Dicke von weniger als 1 mm, besonders bevorzugt eine Dicke zwischen 1 und 800 µm auf. Insbesondere liegt das Beschichtungselement zumindest bereichsweise am Schachtelelement direkt und/oder flächig an. Weiterhin vorteilhaft beschichtet das Beschichtungselement die Außendecke und/oder die Innendecke. Besonders bevorzugt ist das Beschichtungselement wasserundurchlässig und/oder wasserabweisend ausgebildet. Unter "zumindest teilweise" soll in diesem Zusammenhang insbesondere zumindest 1 %, bevorzugt zumindest 50 % besonders bevorzugt zumindest 80 % und ganz besonders bevorzugt zumindest 95 %, bezogen auf eine Gesamtfläche, verstanden werden.

Das Schachtelelement weist bevorzugt eine Breite von weniger als 80 cm, bevorzugt von weniger als 50 cm, besonders bevorzugt von weniger als 20 cm auf. Das Schachtelelement weist bevorzugt eine Breite von mehr als 5 cm, bevorzugt von mehr als 10 cm, besonders bevorzugt von mehr als 15 cm auf. Das Schachtelelement weist bevorzugt eine Höhe von weniger als 50 cm, bevorzugt von weniger als 30 cm, besonders bevorzugt von weniger als 15 cm auf. Das Schachtelelement weist bevorzugt eine Höhe von mehr als 4 cm, bevorzugt von mehr als 8 cm, besonders bevorzugt von mehr als 10 cm auf.

Das Schachtelelement weist bevorzugt eine Länge von weniger als 100 cm, bevorzugt von weniger als 50 cm, besonders bevorzugt von weniger als 35 cm auf. Das Schachtelelement weist bevorzugt eine Länge von mehr als 8 cm, bevorzugt von mehr als 16 cm, besonders bevorzugt von mehr als 25 cm auf. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einer weiteren Ausgestaltung der Erfindung wird vorgeschlagen, dass das zumindest eine Beschichtungselement zu einer zumindest im Wesentlichen vollständigen Beschichtung des zumindest einen Schachtelelements vorgesehen ist. Dadurch kann die Lagereinheit besonders umfassend vor Beschädigungen, Verunreinigungen und/oder Nässe geschützt werden. Unter einer "zumindest im Wesentlichen vollständigen Beschichtung" soll in diesem Zusammenhang verstanden werden, dass das Beschichtungselement mehr als 90 %, bevorzugt mehr als 98 %, besonders bevorzugt 100 % einer Gesamtoberfläche des Schachtelelements abdeckt.

Ferner wird vorgeschlagen, dass das zumindest eine Beschichtungselement eine Folie, insbesondere eine Kunststofffolie, ausbildet. Dadurch kann das Beschichtungselement besonders widerstandsfähig insbesondere gegen einen Abrieb ausgebildet werden. Vorteilhaft kann die Lagereinheit vollständig recycelt werden und/oder in einen Papierkreislauf zurückgeführt werden.

Ist die Folie zumindest im Wesentlichen aus Polyethylenterephthalat ausgebildet, kann das Beschichtungselement besonders einfach auf das Schachtelelement aufgetragen werden. Ferner kann das Beschichtungselement dadurch besonders widerstandsfähig sein.

Weiterhin wird vorgeschlagen, dass die Folie ein Foliengewicht von weniger als 18 g/m², insbesondere von wesentlich weniger als 18 g/m² aufweist. Dadurch kann die Lagereinheit besonders kostengünstig und gewichtsarm ausgebildet werden. Unter "wesentlich weniger als 18 g/m²" soll in diesem Zusammenhang insbesondere weniger als 14 g/m², bevorzugt weniger als 12 g/m², besonders bevorzugt weniger als 10 g/m², ganz besonders bevorzugt weniger als 8 g/m² verstanden werden. Alternativ wird vorgeschlagen, dass das zumindest eine Beschichtungselement eine Folie ausbildet, die ein Foliengewicht von mehr als 18 g/m², insbesondere von wesentlich mehr als 18 g/m² aufweist. Dadurch kann die Lagereinheit besonders belastbar und widerstandsfähig ausgebildet werden. Unter "wesentlich mehr als 18 g/m²" soll in diesem Zusammenhang insbesondere mehr als 24 g/m², bevorzugt mehr als 30 g/m², besonders bevorzugt mehr als 50 g/m², ganz besonders bevorzugt mehr als 100 g/m² verstanden werden.

Vorteilhaft umfasst die Lagereinheit zumindest ein weiteres Beschichtungselement, das auf das zumindest eine Beschichtungselement und/oder auf das zumindest eine Schachtelelement aufgetragen ist. Besonders vorteilhaft ist das zumindest eine weitere Beschichtungselement, das auf das zumindest eine Beschichtungselement und/oder auf das zumindest eine Schachtelelement aufgesprüht und/oder aufgeklebt. Dadurch kann ein besonders hoher Schutz der Lagereinheit auf einfache Weise erzielt werden. Ferner können besonders einfach Farben und/oder Markierungen auf das Beschichtungselement aufgetragen werden.

Ferner wird vorgeschlagen, dass das zumindest eine Schachtelelement doppelseitig vom zumindest einen Beschichtungselement beschichtet ist. Dadurch kann ein besonders hoher Schutz des Schachtelelements erzielt werden. Insbesondere ist das Schachtelelement in einem auseinandergefalteten Zustand doppelseitig vom zumindest einen Beschichtungselement beschichtet. Das Beschichtungselement kann in diesem Zusammenhang einstückig ausgebildet sein und insbesondere um einen Schnittkantenbereich des Schachtelelements umgelegt sein. Besonders bevorzugt ist das Beschichtungselement zweiteilig ausgebildet und liegt im auseinandergefalteten Zustand des Schachtelelements an zwei voneinander abgewandten Seiten des Schachtelelements an. Es ist in diesem Zusammenhang jedoch auch denkbar, dass an den voneinander abgewandten Seiten des Schachtelelements zwei unterschiedliche Beschichtungselemente anliegen, insbesondere mit unterschiedlichen Materialeigenschaften.

In einer weiteren Ausgestaltung der Erfindung wird vorgeschlagen, dass das zumindest eine Beschichtungselement auf das zumindest eine Schachtelelement aufgesprüht ist. Dadurch kann ein Herstellungsvorgang der Lagereinheit besonders schnell und zuverlässig erfolgen. Das zumindest eine Beschichtungselement kann besonders fest mit dem Schachtelelement verbunden werden. Das Beschichtungselement bildet hierbei bevorzugt einen Lack, eine Farbe und/oder bevorzugt eine sich nach dem Sprühvorgang ausbildende Folie, insbesondere Kunststofffolie aus.

Weiterhin wird vorgeschlagen, dass das zumindest eine Beschichtungselement zumindest bereichsweise zumindest einen Schnittkantenbereich des zumindest einen Schachtelelements abdeckt. Dadurch kann ein Eindringen von Schmutz und/oder Nässe in das Beschichtungselement über den Schnittkantenbereich vorteilhaft vermieden werden. Die Lagereinheit kann dadurch besonders belastbar und widerstandsfähig ausgebildet werden. Bevorzugt deckt das zumindest eine Beschichtungselement alle Schnittkantenbereiche des zumindest einen Schachtelelements zumindest teilweise, besonders bevorzugt vollständig, ab. Insbesondere bildet der Schnittkantenbereich einen Bereich aus, der durch einen Schnitt durch das Schachtelelement freigelegt ist. Vorzugsweise liegt im Schnittkantenbereich die Wellenbahn am zumindest einen Beschichtungselement zumindest bereichsweise an.

Ferner wird vorgeschlagen, dass das zumindest eine Beschichtungselement zumindest bereichsweise farbig ausgebildet ist. Dadurch kann das zumindest eine Beschichtungselement optisch besonders gut wahrgenommen und eingeordnet werden. Ferner kann die Lagereinheit optisch besonders ansprechend ausgestaltet werden. Insbesondere wird vorgeschlagen, dass das zumindest eine Beschichtungselement rot, gelb, grün, blau, weiß, schwarz, gemustert und/oder kariert ausgebildet ist. Zusätzlich wird vorgeschlagen, dass das zumindest eine Beschichtungselement zumindest eine Fotografie und/oder eine Zeichnung aufweist.

Zudem wird vorgeschlagen, dass das zumindest eine Schachtelelement eine Schachtel mit einer zumindest teilweise offenen Deckseite ausbildet, wobei eine Frontseite der Schachtel zumindest teilweise geöffnet ist. Dadurch kann ein Beladen und/oder ein Entladen des zumindest einen Schachtelelements besonders benutzerfreundlich erfolgen.

Weiterhin wird vorgeschlagen, dass die Lagereinheit zumindest ein Informationselement umfasst, das dazu vorgesehen ist, zumindest eine Lagerinformation anzuzeigen. Dadurch kann eine besonders übersichtliche Lagerung mittels der Lagereinheit erzielt werden. Unter einem Informationselement soll in diesem Zusammenhang insbesondere eine Beschriftung, eine Codierung, ein QR-Code, ein RFID-Chip, ein NFC-Chip und/oder eine Leuchtdiode verstanden werden. Bevorzugt ist das zumindest eine Informationselement am zumindest einen Beschichtungselement angeordnet und/oder im Schachtelelement eingebracht.

Des Weiteren wird ein Lagersystem vorgeschlagen, insbesondere ein teilautomatisches Lagersystem, mit zumindest einer erfindungsgemäßen Lagereinheit. Besonders bevorzugt ist das Lagersystem vollautomatisch ausgebildet.

Zudem wird vorgeschlagen, dass das Lagersystem zumindest eine Lifteinheit umfasst, die zu einem Lifttransport der zumindest einen Lagereinheit vorgesehen ist. Dadurch kann eine besonders schnelle Bereitstellung der gewünschten Lagereinheit erzielt werden. Weiterhin kann das Lagersystem besonders geräumig ausgebildet werden. Insbesondere ist die zumindest einen Lifteinheit zu einem vertikalen Transport der zumindest einen Lagereinheit vorgesehen. Weiterhin vorteilhaft ist die zumindest eine Lifteinheit zu einem horizontalen Transport der zumindest einen Lagereinheit vorgesehen. Bevorzugt bildet die zumindest eine Lifteinheit ein Umlaufsystem, insbesondere ein Paternostersystem aus.

Weiterhin wird vorgeschlagen, dass das Lagersystem zumindest eine weitere Lagereinheit umfasst, wobei die zumindest eine Lagereinheit und die zumindest eine weitere Lagereinheit voneinander unterschiedliche geometrische Formen aufweist. Dadurch kann eine flexible Lagerung unterschiedlich großer Objekte erzielt werden. Besonders bevorzugt weisen die Lagereinheit und die weitere Lagereinheit voneinander wesentlich unterschiedliche geometrische Formen auf. Unter "wesentliche unterschiedliche geometrische Form" soll in diesem Zusammenhang insbesondere verstanden werden, dass sich zumindest eine geometrische Abmessung der Lagereinheit, insbesondere eine Länge, eine Höhe und/oder eine Breite, zu mehr als 10 %, bevorzugt zu mehr als 50 %, besonders bevorzugt zu mehr als 80 % von einer analogen geometrischen Abmessung der weiteren Lagereinheit unterscheidet.

Ferner wird vorgeschlagen, dass das Lagersystem eine Aufstellgrundfläche aufweist, die kleiner als 40 m² ist, und eine Lagerfläche aufweist, die größer als 200 m² ist. Dadurch kann ein besonders großer Lagerraum, bei gleichzeitig geringem Platzbedarf erzielt werden. Vorteilhaft weist das Lagersystem eine Aufstellgrundfläche auf, die kleiner als 20 m² und besonders vorteilhaft kleiner als 14 m² ist. Besonders vorteilhaft weist das Lagersystem eine Lagerfläche auf, die größer als 400 m² und besonders vorteilhaft größer als 800 m² ist.

Des Weiteren wird vorgeschlagen, dass das Lagersystem eine Gesamthöhe von mehr als 3 m aufweist. Dadurch kann eine besonders große Lagerfläche erzielt werden. Besonders bevorzugt weist das Lagersystem eine Gesamthöhe von mehr als 5 m und ganz besonders bevorzugt von mehr als 10 m auf.

Zudem wird ein Verfahren zur Herstellung einer erfindungsgemäßen Lagereinheit vorgeschlagen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Lagereinheit in einer schematischen Vorderansicht,
- Fig. 2: die Lagereinheit nach Figur 1 in einer schematischen, perspektivischen Darstellung,
- Fig. 3: die Lagereinheit nach Figur 2 in einer schematischen, perspektivischen Detailansicht und
- Fig. 4: ein Lagersystem mit der Lagereinheit nach Figur 1 in einer schematischen, perspektivischen Darstellung.

### Beschreibung des Ausführungsbeispiels

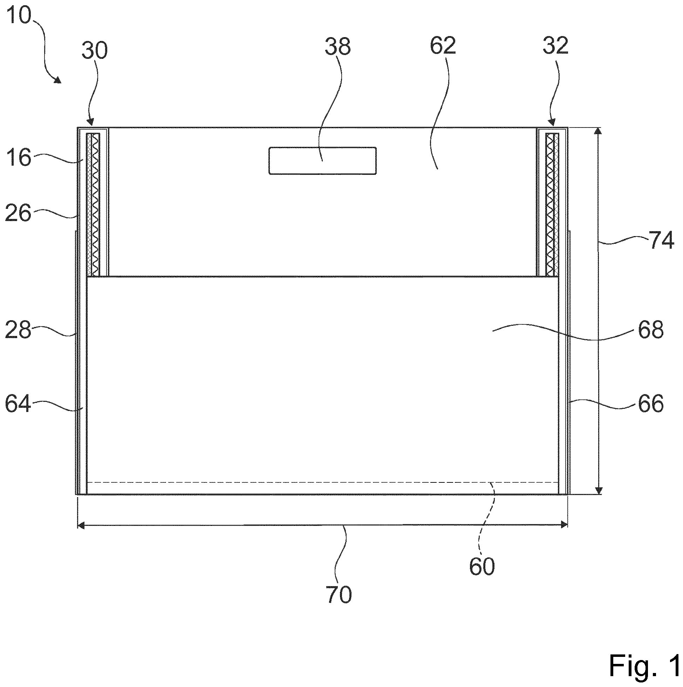

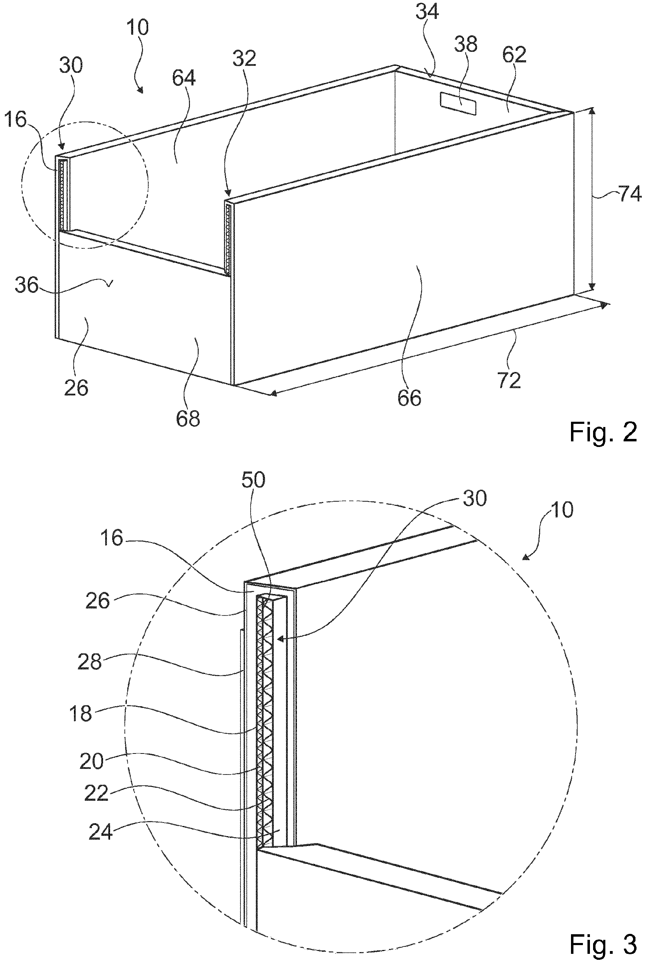

Die Figuren 1 und 2 zeigen eine Lagereinheit 10 für ein zumindest teilautomatisiertes Lagersystem 14. Die Lagereinheit 10 ist zu einer Aufnahme und Lagerung von beliebigen Objekten, insbesondere von Werkzeugen und/oder Werkstücken vorgesehen. Die Lagereinheit 10 umfasst ein Schachtelelement 16. Das Schachtelelement 16 ist aus einem Zellulosematerial ausgebildet. Das Schachtelelement 16 bildet eine Schachtel, insbesondere eine Faltschachtel aus. Das Schachtelelement 16 weist eine Bodenwandung 60 auf. Die Bodenwandung 60 weist einen rechteckigen Grundriss auf. Das Schachtelelement 16 weist eine Rückwandung 62 auf. Die Rückwandung 62 erstreckt sich senkrecht zur Bodenwandung 60.

Das Schachtelelement 16 weist zwei Seitenwandungen 64, 66 auf. Die Seitenwandungen 64, 66 erstrecken sich senkrecht zur Bodenwandung 60. Die Seitenwandungen 64, 66 grenzen jeweils an der Rückwandung 62 an. Die Seitenwandungen 64, 66 erstrecken sich senkrecht zur Rückwandung 62. Das Schachtelelement 16 weist eine Frontwandung 68 auf. Die Frontwandung 68 erstreckt sich senkrecht zur Bodenwandung 60. Die Frontwandung 68 grenzt an die Seitenwandungen 64, 66 an. Die Frontwandung 68 erstreckt sich senkrecht zu den Seitenwandungen 64, 66. Die Bodenwandung 60 ist dreilagig ausgebildet. Die Rückwandung 62 ist dreilagig ausgebildet. Die Seitenwandungen 64, 66 sind dreilagig ausgebildet. Die Frontwandung 68 ist dreilagig ausgebildet. In anderen Worten ist das Schachtelelement 16 derart gefaltet, dass die Bodenwandung 60, die Rückwandung 62, die Seitenwandungen 64, 66 und die Frontwandung 68 jeweils aus drei aufeinanderliegenden Lagen des Schachtelelements 16 gebildet ist.

Eine vertikale Erstreckung der Frontwandung 68 ist geringer als eine vertikale Erstreckung der Rückwandung 62. Die vertikale Erstreckung der Frontwandung 68 ist etwa halb so groß, wie die vertikale Erstreckung der Rückwandung 62. Das Schachtelelement 16 bildet eine Schachtel mit einer offenen Deckseite 34 aus. Das Schachtelelement 16 bildet eine Schachtel mit einer teilweise offenen Frontseite 36 aus. Eine Erstreckungsrichtung der vertikalen Erstreckung verläuft insbesondere senkrecht zu einer Haupterstreckungsebene der Bodenwandung 60. Das Schachtelelement 16 weist eine Schachtelbreite 70 von 16 cm auf. Das Schachtelelement 16 weist eine Schachtellänge 72 von 29,5 cm auf. Das Schachtelelement 16 weist eine Schachtelhöhe 74 von 12 cm auf.

Wie in der Figur 3 näher gezeigt, umfasst das Schachtelelement 16 eine Außendecke 18, eine Wellenbahn 20 und eine Innendecke 24. Die Außendecke 18 ist ungewellt ausgebildet. Die Innendecke 24 ist ungewellt ausgebildet. Die Wellenbahn 20 ist gewellt ausgebildet. Die Wellenbahn 20 ist zwischen der Außendecke 18 und der Innendecke 24 angeordnet. Das Schachtelelement 16 umfasst eine weitere Wellenbahn 22 und eine Zwischendecke 50. Die Zwischendecke 50 ist ungewellt ausgebildet. Die weitere Wellenbahn 22 ist zwischen der Außendecke 18 und der Innendecke 24 angeordnet. Die Zwischendecke 50 ist zwischen den Wellenbahnen 20, 22 angeordnet. Die Wellenbahnen 20, 22 weisen unterschiedliche Wellenlängen auf. Die Wellenbahn 20 liegt direkt an der Außendecke 18 an. Die Wellenbahn 20 liegt direkt an der Zwischendecke 50 an. Die Wellenbahn 20 weist eine kleinere Wellenlänge auf, als die weitere Wellenbahn 22. Die weitere Wellenbahn 22 liegt direkt an der Zwischendecke 50 an. Die weitere Wellenbahn 22 liegt direkt an der Innendecke 24 an. Das Schachtelelement 16 bildet eine Wellpappe, insbesondere eine mehrlagige Wellpappe aus.

Die Lagereinheit 10 umfasst ein Beschichtungselement 26. Das Beschichtungselement 26 ist zu einer zumindest teilweisen Beschichtung des Schachtelelements 16 vorgesehen. Im gezeigten Ausführungsbeispiel ist das Beschichtungselement 26 zu einer zumindest im Wesentlichen vollständigen Beschichtung des Schachtelelements 16 vorgesehen. Das Beschichtungselement 26 deckt mehr als 90 % einer Gesamtoberfläche des Schachtelelements 16 ab.

Das Beschichtungselement 26 bildet eine Folie aus. Das Beschichtungselement 26 ist aus Polyethylenterephthalat (PET) ausgebildet. Es ist in diesem Zusammenhang jedoch auch denkbar, dass die Folie aus einem anderen, dem Fachmann als sinnvoll erscheinenden Material, wie insbesondere aus Polyethylen (PE), Polypropylen (PP), Polyvinylchlorid (PVC), Polyurethan (PU) und/oder aus einem Metall ausgebildet ist. Die Folie weist ein Foliengewicht von weniger als 12 g/m² auf. In einer Variante der Erfindung weist die Folie ein Foliengewicht von mehr als 24 g/m² auf. Das Beschichtungselement 26 weist eine Dicke zwischen 1 und 800 µm auf. Zur Verdeutlichung ist das Beschichtungselement 26 in den Figuren übertrieben dick und nicht maßstabsgetreu dargestellt. Das Schachtelelement 16 ist doppelseitig vom Beschichtungselement 26 beschichtet. Das Beschichtungselement 26 liegt direkt am Schachtelelement 16 an. Das Beschichtungselement 26 liegt flächig am Schachtelelement 16 an. Das Beschichtungselement 26 ist zweiteilig ausgebildet. Ein Teil des Beschichtungselements 26 liegt direkt der Außendecke 18 an. Ein anderer Teil des Beschichtungselements 26 liegt direkt der Innendecke 24 an. Aus Gründen der Übersichtlichkeit ist das Beschichtungselement 26 nur an einer zu einer Umgebung hin gerichteten Fläche der Seitenwandung 64 dargestellt. Tatsächlich ist das Beschichtungselement 26 auf jeder Fläche des Schachtelelements 16 angeordnet. Im Schnitt durch die Seitenwandung 64 wäre das Beschichtungselement 26 aufgrund der dreifachen Faltung des Schachtelelements 16 und der doppelseitigen Anordnung des Beschichtungselements 26 am Schachtelelement 16 insgesamt sechsmal zu erkennen.

Das Beschichtungselement 26 deckt zwei Schnittkantenbereiche 30, 32 des Schachtelelements 16 ab. Aus Gründen der Übersichtlichkeit sind die Schnittkantenbereiche 30, 32 in den Figuren offen dargestellt. Es ist in diesem Zusammenhang auch denkbar, dass die Schnittkantenbereiche 30, 32 frei vom Beschichtungselement 26 sind. Die Schnittkantenbereiche 30, 32 sind dabei Bereiche, in denen die Wellenbahnen 20, 22 und die Zwischendecke 50 ohne eine Abdeckung durch das Beschichtungselement 26 zu einer Umgebung hin frei liegen würden. In den Schnittkantenbereichen 30, 32 liegt das Beschichtungselement 26 an Kanten der Wellenbahnen 20, 22 und der Zwischendecke 50 an.

Das Beschichtungselement 26 ist auf das Schachtelelement 16 aufgeklebt. In einer Variante der Erfindung ist das Beschichtungselement 26 auf das Schachtelelement 16 aufgesprüht. Das Beschichtungselement 26 ist farbig ausgebildet. Das Beschichtungselement 26 ist lichtundurchlässig ausgebildet. Das Beschichtungselement 26 ist rot, gelb, grün, blau, weiß, schwarz, gemustert und/oder kariert ausgebildet. Alternativ weist das Beschichtungselement 26 eine Fotografie und/oder eine Zeichnung auf. In einer Variante der Erfindung ist das Beschichtungselement 26 transparent ausgebildet.

Die Lagereinheit 10 umfasst ein weiteres Beschichtungselement 28. Das weitere Beschichtungselement 28 ist auf dem Beschichtungselement 26 angeordnet. Genauer gesagt ist das weitere Beschichtungselement 28 auf dem Beschichtungselement 26 aufgesprüht. Das weitere Beschichtungselement 28 ist farbig ausgebildet. Das weitere Beschichtungselement 28 ist rot, gelb, grün, blau, weiß, schwarz, gemustert und/oder kariert ausgebildet. Alternativ weist das weitere Beschichtungselement 28 eine Fotografie und/oder eine Zeichnung auf. In einer Variante der Erfindung ist das weitere Beschichtungselement 28 transparent ausgebildet. Es ist in diesem Zusammenhang jedoch auch denkbar, dass das weitere Beschichtungselement 28 auf das Beschichtungselement 26 aufgeklebt ist.

Die Lagereinheit 10 umfasst ein Informationselement 38. Das Informationselement 38 ist dazu vorgesehen, eine Lagerinformation anzuzeigen. Die Lagerinformation kann insbesondere Details über das von der Lagereinheit 10 zu lagernde Objekt beinhalten. Das Informationselement 38 ist auf dem Beschichtungselement 26 angeordnet. Genauer gesagt ist das Informationselement 38 auf das Beschichtungselement 26 aufgeklebt.

Das Informationselement 38 ist im Bereich der Rückwandung 62 angeordnet. Das Informationselement 38 bildet ein Anzeigeschild aus. In einer nicht dargestellten Variante der Erfindung ist das Informationselement 38 als RFID-Chip und/oder als NFC-Chip ausgebildet. Hierbei ist das Informationselement 38 im Schachtelelement 16 integriert. In anderen Worten ist das Informationselement 38 zwischen der Außendecke 18 und der Innendecke 24 angeordnet.

In einem Verfahren zur Herstellung der Lagereinheit 10 wird zunächst die Außendecke 18, die Wellenbahnen 20, 22, die Innendecke 24 und die Zwischendecke 50 miteinander verbunden, wodurch das Schachtelelement 16 ausgebildet wird. Anschließend wird das Beschichtungselement 26 auf das Schachtelelement 16 aufgebracht. Genauer gesagt wird das Beschichtungselement 26 auf das Schachtelelement 16 aufgeklebt, insbesondere laminiert. Alternativ wird das Beschichtungselement 26 auf das Schachtelelement 16 aufgesprüht und/oder aufgeflockt. Das Schachtelelement 16 wird ausgestanzt und abschließend in eine Schachtelform gefaltet.

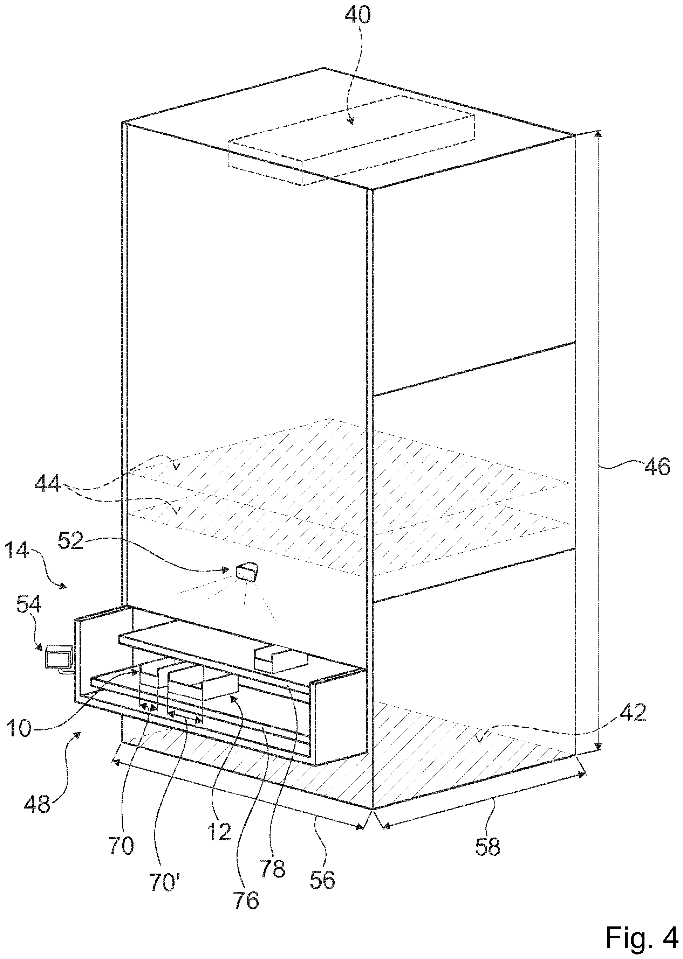

In der Figur 4 ist ein Lagersystem 14 gezeigt. Das Lagersystem 14 bildet ein teilautomatisches Lagersystem aus. Das Lagersystem 14 umfasst die Lagereinheit 10. Das Lagersystem 14 umfasst eine weitere Lagereinheit 12. Genauer gesagt umfasst das Lagersystem 14 eine Vielzahl an Lagereinheiten. Die Lagereinheiten 10, 12 sind auf Auszügen des Lagersystems 14 angeordnet. Die Auszüge sind beweglich ausgebildet. In der gezeigten Figur sind lediglich zwei Auszüge 76, 78 gezeigt. Die Lagereinheiten 10, 12 sind auf einem Auszug 76 der Auszüge 76, 78 angeordnet.

Weitere nicht näher bezeichnete Lagereinheiten sind auf den anderen Auszügen angeordnet.

Das Lagersystem 14 weist eine Aufstellgrundfläche 42 auf, die kleiner als 40 m² ist. Die Aufstellgrundfläche 42 beträgt 14 m². Das Lagersystem 14 weist eine Lagerfläche 44 auf, die größer als 400 m² ist. Die Lagerfläche 44 beträgt 840 m². Die Lagerfläche 44 verteilt sich auf eine Vielzahl an Etagen, wobei in der Figur 4 nur beispielhaft zwei Etagen angedeutet sind. Das Lagersystem 14 weist eine Gesamthöhe 46 von mehr als 3 m auf. Das Lagersystem 14 weist eine Gesamthöhe 46 von mehr als 3 m auf. Beispielhaft weist das Lagersystem 14 eine Gesamthöhe 46 von 6,5 m auf. Es ist in diesem Zusammenhang jedoch auch denkbar, dass die Gesamthöhe 46 einen anderen Wert, insbesondere einen Wert zwischen 3,3 m und 14,1 m beträgt. Eine Aufstellbreite 56 des Lagersystems 14 beträgt 3,5 m. Eine Aufstelltiefe 58 des Lagersystems 14 beträgt 4 m. Es ist in diesem Zusammenhang jedoch auch denkbar, dass die Aufstellbreite 56 und/oder die Aufstelltiefe 58 einen anderen, dem Fachmann als sinnvoll erscheinenden Wert aufweist.

Das Lagersystem 14 umfasst eine Lifteinheit 40. Die Lifteinheit 40 ist zu einem Lifttransport der Lagereinheit 10 vorgesehen. Die Lifteinheit 40 ist zu einem vertikalen Transport der Lagereinheit 10 vorgesehen. Die Lifteinheit 40 ist ebenfalls zu einem horizontalen Transport der Lagereinheit 10 vorgesehen. Die Lifteinheit 40 bildet ein Umlaufsystem aus. Insbesondere ist die Lifteinheit 40 dazu vorgesehen, die Lagereinheit 10 nach einem Paternosterprinzip zu bewegen. Die Lifteinheit 40 ist zu einer Bewegung der Auszüge 76, 78 vorgesehen, auf welche die Lagereinheit 10 stellbar ist. Die Lagereinheit 10 ist aus dem Lagersystem 14 entnehmbar.

Die Lagereinheit 10 und die weitere Lagereinheit 12 weisen voneinander unterschiedliche geometrische Formen auf. Die Lagereinheit 10 und die weitere Lagereinheit 12 unterscheiden sich insbesondere in der Schachtelbreite 70, der Schachtellänge 72 und/oder der Schachtelhöhe 74. Beispielhaft weist die weitere Lagereinheit 12 eine größere Schachtelbreite 70' auf, als die Lagereinheit 10.

Das Lagersystem 14 umfasst eine Bedieneinheit 54. Die Bedieneinheit 54 ist zu einer Bedienung des Lagersystems 14 durch einen Bediener vorgesehen. Die Bedieneinheit 54 umfasst ein Eingabemittel und ein Ausgabemittel. Genauer gesagt umfasst die Bedieneinheit 54 einen berührungsempfindlichen Bildschirm. Über die Bedieneinheit 54 ist eine Lagereinheit 10 oder ein in der Lagereinheit 10 gelagertes Objekt auswählbar. Die Lifteinheit 40 bewegt nach Auswahl die gewünschte Lagereinheit 10, bzw. den die Lagereinheit 10 tragenden Auszug 76 zu einem Ausgabebereich 48. Das Lagersystem 14 umfasst eine Sensoreinheit 52. Die Sensoreinheit 52 ist zu einer Erfassung eines Gegenstands oder eines Körperteils innerhalb des Ausgabebereichs 48 vorgesehen. Die Sensoreinheit 52 ist dazu vorgesehen, in zumindest einem Betriebsmodus die Lifteinheit 40 zu stoppen, falls sich ein unzulässiger Gegenstand oder ein Körperteil in den Ausgabebereich 48 bewegt und/oder befindet. Dadurch können Verletzungen und/oder Betriebsstörungen vermieden werden.

## Patentansprüche

1. Lagereinheit (10, 12) eines zumindest teilautomatisierten Lagersystems (14), mit zumindest einem Schachtelelement (16),
**dadurch gekennzeichnet, dass**
das Schachtelelement (16) zumindest im Wesentlichen, und zwar zu einem Gesamtmassenanteil und/oder Gesamtvolumenanteil von mehr als 50 %, aus einem Zellulosematerial ausgebildet ist, wobei die Lagereinheit zumindest ein Beschichtungselement (26) umfasst, das zu einer zumindest teilweisen Beschichtung des zumindest einen Schachtelelements (16) vorgesehen ist.

2. Lagereinheit (10, 12) nach Anspruch 1,
**dadurch gekennzeichnet, dass**
das zumindest eine Beschichtungselement (26) zu einer zumindest im Wesentlichen vollständigen Beschichtung des zumindest einen Schachtelelements (16) vorgesehen ist, wobei das Beschichtungselement (26) mehr als 90 % einer Gesamtoberfläche des Schachtelelements (16) abdeckt.

3. Lagereinheit (10, 12) nach Anspruch 1 oder 2,
**dadurch gekennzeichnet, dass**
das zumindest eine Beschichtungselement (26) eine Folie, insbesondere eine Kunststofffolie, ausbildet.

4. Lagereinheit (10, 12) nach Anspruch 3,
**dadurch gekennzeichnet, dass**
die Folie zumindest im Wesentlichen aus Polyethylenterephthalat ausgebildet ist.

5. Lagereinheit (10, 12) nach Anspruch 3 oder 4,
**dadurch gekennzeichnet, dass**
die Folie ein Foliengewicht von weniger als 18 g/m², insbesondere von wesentlich weniger als 18 g/m² aufweist.

6. Lagereinheit (10, 12) nach einem der vorhergehenden Ansprüche,
**gekennzeichnet durch**
zumindest ein weiteres Beschichtungselement (28), das auf das zumindest eine Beschichtungselement (26) und/oder auf das zumindest eine Schachtelelement (16) aufgetragen ist.

7. Lagereinheit (10, 12) nach einem der vorhergehenden Ansprüche,
**dadurch gekennzeichnet, dass**
das zumindest eine Schachtelelement (16) doppelseitig vom zumindest einen Beschichtungselement (26, 28) beschichtet ist.

8. Lagereinheit (10, 12) nach einem der vorhergehenden Ansprüche,
**dadurch gekennzeichnet, dass**
das zumindest eine Beschichtungselement (26) auf das zumindest eine Schachtelelement (16) aufgesprüht ist.

9. Lagereinheit (10, 12) nach einem der vorhergehenden Ansprüche,
**dadurch gekennzeichnet, dass**
das zumindest eine Beschichtungselement (26) zumindest bereichsweise zumindest einen Schnittkantenbereich (30, 32) des zumindest einen Schachtelelements (16) abdeckt.

10. Lagereinheit (10, 12) nach einem der vorhergehenden Ansprüche,
**dadurch gekennzeichnet, dass**
das zumindest eine Beschichtungselement (26, 28) zumindest bereichsweise farbig ausgebildet ist.

11. Lagereinheit (10, 12) nach einem der vorhergehenden Ansprüche,
**dadurch gekennzeichnet, dass**
das zumindest eine Schachtelelement (16) eine Schachtel mit einer zumindest teilweise offenen Deckseite (34) ausbildet, wobei eine Frontseite (36) der Schachtel zumindest teilweise geöffnet ist.

12. Lagereinheit (10, 12) nach einem der vorhergehenden Ansprüche,
**gekennzeichnet durch**
zumindest ein Informationselement (38), das dazu vorgesehen ist, zumindest eine Lagerinformation anzuzeigen.

13. Lagereinheit (10, 12) nach einem der vorhergehenden Ansprüche,
**dadurch gekennzeichnet, dass**
das Schachtelelement zumindest eine Außendecke (18), zumindest eine Wellenbahn (20, 22) und zumindest eine Innendecke (24) umfasst, wobei die zumindest eine Wellenbahn (20, 22) zwischen der zumindest einen Außendecke (18) und der zumindest einen Innendecke (24) angeordnet ist.

14. Lagersystem (14), insbesondere teilautomatisches Lagersystem, mit zumindest einer Lagereinheit (10) nach einem der vorhergehenden Ansprüche.

15. Lagersystem (14) nach Anspruch 14,
**gekennzeichnet durch**
zumindest eine Lifteinheit (40), die zu einem Lifttransport der zumindest einen Lagereinheit (10) vorgesehen ist.

16. Lagersystem (14) nach Anspruch 14 oder 15,
**gekennzeichnet durch**
zumindest eine weitere Lagereinheit (12), wobei die zumindest eine Lagereinheit (10) und die zumindest eine weitere Lagereinheit (12) voneinander unterschiedliche geometrische Formen aufweist.

17. Lagersystem (14) zumindest nach Anspruch 14,
**gekennzeichnet durch**
eine Aufstellgrundfläche (42), die kleiner als 40 m² ist, und eine Lagerfläche (44), die größer als 200 m² ist.

18. Lagersystem (14) zumindest nach Anspruch 14,
**gekennzeichnet durch**
eine Gesamthöhe (46) von mehr als 3 m.

## Claims

1. Storage unit (10, 12) of an at last partly automated storage system (14), with at least one box element (16),
**characterised in that** the box element (16) is made at least substantially, namely with a total mass percentage and/or total volume percentage of more than 50 %, of a cellulose material, the storage unit (10, 12) comprising at least one coating element (26) that is configured for an at least partial coating of the at least one box element (16).

2. Storage unit (10, 12) according to claim 1,
**characterised in that** the at least one coating element (26) is configured for an at least substantially complete coating of the at least one box element (16), the coating element (26) covering more than 90 % of a total surface area of the box element (16).

3. Storage unit (10, 12) according to claim 1 or 2,
**characterised in that** the at least one coating element (26) forms a foil, in particular a synthetic foil.

4. Storage unit (10, 12) according to claim 3,
**characterised in that** the foil is realized at least substantially of polyethylene terephthalate.

5. Storage unit (10, 12) according to claim 3 or 4,
**characterised in that** the film has a foil weight of less than 18 g/m², in particular substantially less than 18 g/m².

6. Storage unit (10, 12) according to one of the preceding claims,
**characterised by** at least one further coating element (28), which is applied onto the at least one coating element (26) and/or onto the at least one box element (16).

7. Storage unit (10, 12) according to one of the preceding claims,
**characterised in that** the at least one box element (16) is coated by the at least one coating element (26, 28) on two sides.

8. Storage unit (10, 12) according to one of the preceding claims,
**characterised in that** the at least one coating element (26) is sprayed onto the at least one box element (16).

9. Storage unit (10, 12) according to one of the preceding claims,
**characterised in that** the at least one coating element (26) at least portion-wise covers at least one cutting-edge region (30, 32) of the at least one box element (16).

10. Storage unit (10, 12) according to one of the preceding claims,
**characterised in that** the at least one coating element (26, 28) is implemented at least portion-wise in a coloured manner.

11. Storage unit (10, 12) according to one of the preceding claims,
**characterised in that** the at least one box element (16) forms a box having an at least partly open top side (34), wherein a front side (36) of the box is at least partly open.

12. Storage unit (10, 12) according to one of the preceding claims,
**characterised by** at least one information element (38), which is configured to display at least one storage information.

13. Storage unit (10, 12) according to one of the preceding claims,
**characterised in that** the box element (16) comprises at least one outer cover (18), at least one corrugated panel (20, 22) and at least one inner cover (24), the at least one corrugated panel (20, 22) being arranged between the at least one outer cover (189 and the at least one inner cover (24).

14. Storage system (14), in particular partly automated storage system, with at least one storage unit (10) according to one of the preceding claims.

15. Storage system (14) according to claim 14,
**characterised by** at least one lift unit (40), which is configured for a lift transport of the at least one storage unit (10).

16. Storage system (14) according to claim 14 or 15,
**characterised by** at least one further storage unit (12), wherein the at least one storage unit (10) and the at least one further storage unit (12) have respectively different geometric shapes.

17. Storage system (14) at least according to claim 14,
**characterised by** a positioning surface (42) which is smaller than 40 m² and a storage surface (44) which is larger than 200 m².

18. Storage system (14) at least according to claim 14,
**characterised by** a total height of more than 3 m.

## Revendications

1. Unité de stockage (10, 12) d'un système de stockage (14) qui est au moins partiellement automatisé, avec au moins un élément de boîte (16),
**caractérisée en ce que** l'élément de boîte (16) est formé au moins sensiblement, à savoir avec un pourcentage en masse totale et/ou un pourcentage en volume total de plus de 50 %, d'un matériau de cellulose, l'unité de stockage comprenant au moins un élément de revêtement (26) qui est prévu pour un revêtement au moins partiel de l'au moins un élément de boîte (16).

2. Unité de stockage (10, 12) selon la revendication 1,
**caractérisée en ce que** l'au moins un élément de revêtement (26) est prévu pour un revêtement au moins sensiblement complet de l'au moins un élément de boîte (16), l'élément de revêtement (26) couvrant plus de 90 % d'une superficie totale de l'élément de boîte (16).

3. Unité de stockage (10, 12) selon la revendication 1 ou 2,
**caractérisée en ce que** l'au moins un élément de revêtement (26) implémente une feuille, en particulier une feuille synthétique.

4. Unité de stockage (10, 12) selon la revendication 3,
**caractérisée en ce que** la feuille est implémentée au moins sensiblement de poly-téréphtalate d'éthylène.

5. Unité de stockage (10, 12) selon la revendication 3 ou 4,
**caractérisée en ce que** la feuille présente un poids de feuille inférieur à 18 g/m², en particulier considérablement inférieur à 18 g/m².

6. Unité de stockage (10, 12) selon l'une quelconque des revendications précédentes,
**caractérisée par** au moins un élément de revêtement de plus (28), qui est appliqué sur l'au moins un élément de revêtement (26) et/ou sur l'au moins un élément de boîte (16).

7. Unité de stockage (10, 12) selon l'une quelconque des revendications précédentes,
**caractérisée en ce que** l'au moins un élément de boîte (16) est revêtu sur deux côtés par l'au moins un élément de revêtement (26, 28).

8. Unité de stockage (10, 12) selon l'une quelconque des revendications précédentes,
**caractérisée en ce que** l'au moins un élément de revêtement (26) est pulvérisé sur l'au moins un élément de boîte (16).

9. Unité de stockage (10, 12) selon l'une quelconque des revendications précédentes,
**caractérisée en ce que** l'au moins un élément de revêtement (26) couvre, au moins par section(s), au moins une zone bord de coupe (30, 32) de l'au moins un élément de boîte (16).

10. Unité de stockage (10, 12) selon l'une quelconque des revendications précédentes,
**caractérisée en ce que** l'au moins un élément de revêtement (26, 28) est implémenté au moins par section/s d'une manière colorée.

11. Unité de stockage (10, 12) selon l'une quelconque des revendications précédentes,
**caractérisée en ce que** l'au moins un élément de boîte (16) forme une boîte ayant une face supérieure (34) au moins partiellement ouverte, une face frontale (36) de la boîte étant au moins partiellement ouverte.

12. Unité de stockage (10, 12) selon l'une quelconque des revendications précédentes,
**caractérisée par** au moins un élément d'information (38), qui est prévu à afficher au moins une information de stockage.

13. Unité de stockage (10, 12) selon l'une quelconque des revendications précédentes,
**caractérisée en ce que** l'élément de boîte comporte au moins une couche extérieure (18), au moins un panneau ondulé (20, 22) et au moins une couche intérieure (24), l'au moins un panneau ondulé (20, 22) étant agencé entre l'au moins une couche extérieure (18) et l'au moins une couche intérieure (24).

14. Système de stockage (14), en particulier système de stockage partiellement automatisé, avec au moins une unité de stockage (10) selon l'une quelconque des revendications précédentes.

15. Système de stockage (14) selon la revendication 14,
**caractérisé par**
au moins une unité d'élévateur (40), qui est prévue pour un transport par élévateur de l'au moins une unité de stockage (10).

16. Système de stockage (14) selon la revendication 14 ou 15,
**caractérisé par**
au moins une unité de stockage de plus (12), l'au moins une unité de stockage (10) et l'au moins une unité de stockage de plus (12) ayant de formes géométriques différant l'une de l'autre.

17. Système de stockage (14) au moins selon la revendication 14,
**caractérisé par**
une surface de base à positionnement (42) qui est inférieure à 40 m² et une surface de stockage (44) qui est supérieure à 200 m².

18. Système de stockage (14) au moins selon la revendication 14,
**caractérisé par**
une hauteur totale (46) de plus de 3 m.
